# EUROPÄISCHE PATENTSCHRIFT

(11) **EP 1 139 085 B1**
(45) Veröffentlichungstag und Bekanntmachung des Hinweises auf die Patenterteilung: **28.05.2003**
(21) Anmeldenummer: 01104615.8
(22) Anmeldetag: 23.02.2001
(51) Int. Cl.: G01L 1/22, G01L 9/00

(54) **Herstellungsverfahren für ein Dünnschicht-Bauelement, insbesondere ein Dünnschicht-Hochdrucksensorelement**
Method of manufacturing a thin-film electrical component, in particular a thin-film electrical component for use at high pressure
Méthode de fabrication d'un composant électrique à couche mince, notamment d'un composant électrique à couche mince fonctionnant à haute pression

(30) Priorität: 25.03.2000 DE 10014985
(43) Veröffentlichungstag der Anmeldung: 04.10.2001
(73) Patentinhaber: ROBERT BOSCH GMBH, 70442 Stuttgart (DE)
(72) Erfinder: Glück, Joachim, 71272 Renningen (DE)

(56) Entgegenhaltungen:
- US-A- 4 010 759
- US-A- 4 458 295
- US-A- 5 549 006
- DUNBAR M L: "A SMALL OUTLINE PRESSURE SENSOR FOR AUTOMOTIVE APPLICATIONS" SOCIETY OF AUTOMOTIVE ENGINEERS PUBLICATIONS, XX, XX, 1999, Seiten 47-51, XP001000232

## Beschreibung

### STAND DER TECHNIK

Die vorliegende Erfindung betrifft ein Herstellungsverfahren für ein Dünnschicht-Bauelement, insbesondere ein Dünnschicht-Hochdrucksensorelement, welcher ein Substrat aufweist, auf das mindestens eine zu strukturierende Funktionsschicht aufzubringen ist.

Obwohl prinzipiell auf beliebige Dünnschicht-Bauelemente anwendbar, werden die vorliegende Erfindung sowie die ihr zugrundeliegende Problematik in bezug auf ein Dünnschicht-Hochdrucksensorelement erläutert, wie aus M. L. Dunbar: Small Outline Pressure Sensor for Automotive Applications, Society of Automotive Engineers, 1999, pp. 47 - 51, bekannt.

Solche Hochdrucksensoren kommen in zahlreichen Systemen im Kraftfahrzeug-Bereich zum Einsatz. Hierzu gehören die Benzindirekteinspritzung, Common-Rail-Dieseldirekteinspritzung, Fahrdynamikregelung und die elektrohydraulische Bremse. Auch im Bereich der Automatisierungstechnik werden Hochdrucksensoren eingesetzt. Die Funktion dieser Sensoren beruht auf der Umwandlung der durch den Druck hervorgerufenen mechanischen Verformung einer Edelstahlmembran in ein elektrisches Signal mit Hilfe eines Dünnschichtsystems. Die Deformation, und damit das Ausgangssignal, ist hierbei durch die mechanischen Eigenschaften der Membran und den zu messenden Druck bestimmt.

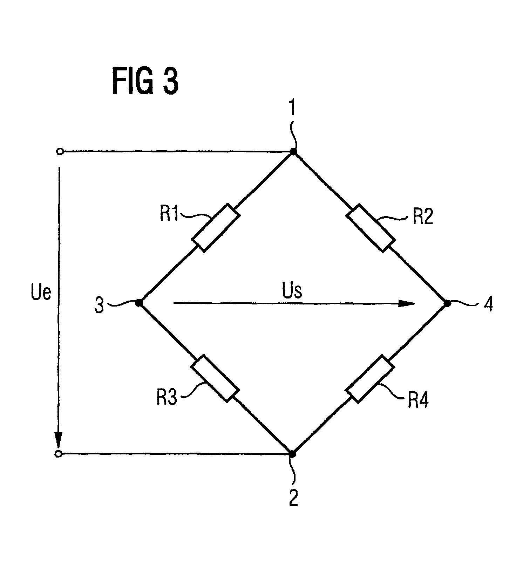

Fig. 3 zeigt den prinzipiellen Schaltungsaufbau des Dünnschichtsystems der heutzutage üblicherweise eingesetzten Hochdrucksensoren, nämlich den Wheatstone-Meßbrücken-Aufbau.

Zur Messung von statischen und dynamischen Drücken verschiedener Medien wird die Durchbiegung der an das Medium angrenzenden Edelstahlmembran mit Hilfe einer als Wheatstone-Brücke angeordneten Matrix aus Widerstandselementen R1, R2, R3, R4 detektiert.

Zwischen den Punkten 1 und 2 wird eine Gleichspannung Ue eingeprägt. Bei einer abgeglichenen, mechanisch nicht verformten Widerstandsmeßbrücke beträgt die Ausgangsspannung Us zwischen den Punkten 3 und 4 Us = 0 Volt.

Eine mechanische Verformung des aus Edelstahl bestehenden Substrates infolge eines von der Membranunterseite angelegten Druckes bewirkt eine Verstimmung der Widerstandsmeßbrücke und damit die Erzeugung einer Spannung Us ≠ 0 zwischen den Punkten 3 und 4.

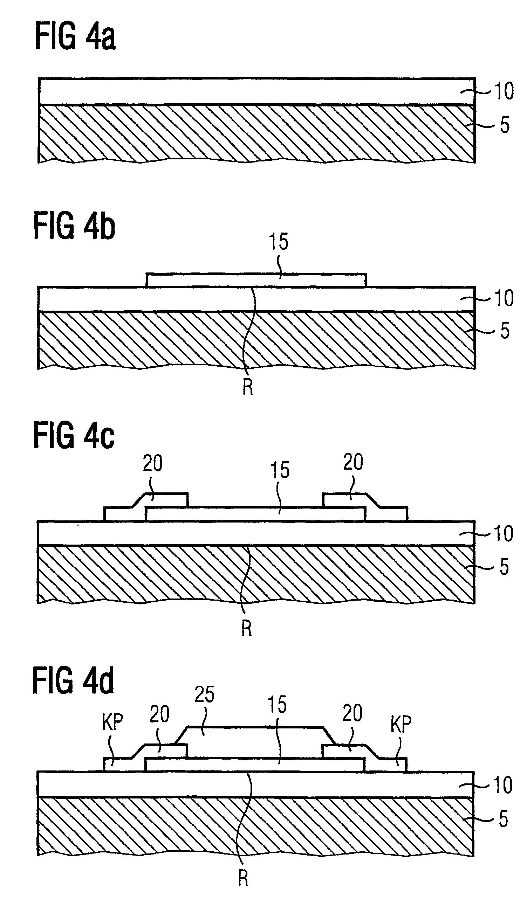

Fig. 4a-d zeigt einen Fließplan zur Illustration der speziellen Verfahrensschritte bei heutzutage üblicherweise eingesetzten Hochdrucksensorelementen.

Zunächst erfolgt die Herstellung des Substrates 5 aus Edelstahl durch Drehprozesse. Anschließend erfolgen ein Läppen und Polieren der Substratoberseite zur Erzeugung eines ebenen Untergrundes als Grundlage für die im Anschluß in Dünnschichttechnik aufzubringende Widerstandsmeßbrücke. Die Rauhtiefe der Stahloberfläche, muß dabei etwa der Dicke der als Widerstandsmaterial verwendeten Polysiliziumschicht 15 entsprechen, sie liegt also bei etwa 500 nm.

Im einzelnen erfolgt das Aufbringen der Widerstandsmeßbrükke mit Hilfe folgender gängiger Verfahrensschritte der Dünnschichttechnik.

Zunächst wird gemäß Fig. 4a eine ca. 10 µm dicke Isolationsschicht 10 z.B. aus SiO₂ mit Hilfe des PECVD(Plasma Enhanced Chemical Vapor Deposition)-Verfahrens abgeschieden. Die Isolationsschicht 10 dient zur elektrischen Isolation der nachfolgend aufgebrachten Widerstandsmeßbrücke gegenüber dem leitfähigen Substrat 5.

Es folgt gemäß Fig. 4b das Abscheiden von 500 nm dicken Bor-dotierten Polysiliziumschicht 15 mit Hilfe des PECVD-Verfahrens.

Es folgt weiterhin das Erzeugen einer Photolackmaske durch sukzessives Belacken, Belichten durch eine Photomaske und Entwickeln der belichteten Schicht. Die dabei erzeugte Lackmaske dient als Ätzmaske zur Strukturierung der Widerstandschicht 15 durch Plasmaätzen, um die Widerstände R zu bilden.

Nach Entfernen der Lackmaske mit Hilfe von Lösemitteln erfolgt gemäß Fig. 4c das Aufbringen einer mit Hilfe des Bondverfahrens kontaktierbaren ca. 500 nm dicken Schichtenfolge 20 aus NiCr/Pd/Au (oder nur 500 nm Ni) durch einen Sputter- oder Aufdampfprozeß. Die daraus zu bildenden Kontaktpads KP erhalten ihre geometrische Form, indem der Sputter- bzw. Aufdampfprozeß durch eine Schattenmaske ausgeführt wird. Diese Schattenmaske bedeckt alle Bereiche, die nicht mit den Kontaktpads KP versehen werden sollen und besitzt dort Öffnungen, wo die eigentlichen Kontaktpads KP entstehen sollen.

Anschließend erfolgt gemäß Fig. 4d das Abscheiden einer Passivierungschicht 25 aus einer 500 nm dicken SiₓN_{y}-Schicht mit Hilfe des PECVD-Verfahrens. Die Passivierungsschicht 25 dient zum Schutz der Widerstandsmeßbrücke gegenüber äußeren Umwelteinflüssen (z.B. Feuchtigkeit) und bedeckt ausschließlich den Bereich der Widerstandsmeßbrücke, nicht aber die Kontaktpads KP. Das Aufbringen der Passivierungsschicht 25 findet ebenfalls durch eine Schattenmaske hindurch statt.

Letztlich erfolgt das Kontaktieren der Widerstandsmeßbrücke durch Anbonden einer Auswerteschaltung über Al- oder Au-Drähte.

Als nachteilhaft bei dem obigen bekannten Ansatz hat sich die Tatsache herausgestellt, daß der Herstellungsaufwand verhältnismäßig hoch ist.

### VORTEILE DER ERFINDUNG

Das erfindungsgemäße Herstellungsverfahren mit den Merkmalen des Anspruchs 1 weist gegenüber bekannten Lösungsansätzen den Vorteil auf, daß eine Reduzierung der Zahl der Prozeßschritte erzielbar ist.

Die der vorliegenden Erfindung zugrundeliegende Idee besteht darin, daß das Bauelement basierend auf der Verwendung von einem anodisch oxidierbaren Material, z.B. Ta, als Material der elektrisch leitenden Funktionsschicht hergestellt wird und ein nicht-maskierter Bereich der Funktionsschicht im Elektrolysebad zu einer Passivierungsschicht oxidiert wird ( z.B. Ta zu Ta₂O₅). Damit läßt sich ein Ersatz der bisher üblichen Passivierung aus PECVD-SiₓN_{y} durch eine kostengünstig mit Hilfe eine Elektrolysebades hergestellte Passivierung (z.B. aus Tantalpentoxid (Ta₂O₅)) bewerkstelligen. Zwei anstatt bisher drei Maskenebenen genügen somit zur Herstellung des Bauelements.

In den Unteransprüchen finden sich vorteilhafte Weiterbildungen und Verbesserungen des in Anspruch 1 angegebenen Herstellungsverfahrens.

Gemäß einer bevorzugten Weiterbildung wird der bestimmte Bereichs der strukturierten Funktionsschicht demaskiert und zum elektrischen Anschluß, insbesondere durch Bondierung, verwendet. Dies hat den Vorteil, daß es keiner zusätzlichen Kontaktschicht bedarf.

Gemäß einer weiteren bevorzugten Weiterbildung wird das Strukturieren der Funktionsschicht mittels eines Ätzprozesses unter Verwendung einer ersten Photomaske durchgeführt.

Gemäß einer weiteren bevorzugten Weiterbildung wird das Maskieren des bestimmten Bereichs der strukturierten Funktionsschicht unter Verwendung einer zweiten Photomaske durchgeführt.

Gemäß einer weiteren bevorzugten Weiterbildung wird über der Funktionsschicht eine weitere Funktionsschicht abgeschieden. Die weitere Funktionsschicht wird zusammen mit der Funktionsschicht strukturiert, und die weitere Funktionsschicht wird zum Bilden des maskierten Bereichs und des nicht-maskierten Bereichs teilweise entfernt. Dies hat den Vorteil, daß die zweite Funktionsschicht als Maske verwendet werden kann.

Gemäß einer weiteren bevorzugten Weiterbildung wird die strukturierte weitere Funktionsschicht zusammen mit dem nicht-maskierten Bereich der Funktionsschicht anodisch oxidiert wird und anschließend vom Oxid befreit, wobei das Oxid auf der Funktionsschicht (150) belassen wird.

Gemäß einer weiteren bevorzugten Weiterbildung wird die vom Oxid befreite weitere Funktionsschicht zum elektrischen Anschluß, insbesondere durch Bondung, verwendet. Damit können die Bondeigenschaften unabhängig vom Material der Funktionsschicht eingestellt werden.

Gemäß einer weiteren bevorzugten Weiterbildung ist das Dünnschicht-Bauelement ein Dünnschicht-Hochdrucksensorelement, bei dem das Substrat eine Stahlmembran und eine darüberliegende Isolationsschicht aufweist.

Gemäß einer weiteren bevorzugten Weiterbildung ist die Funktionsschicht eine Ta-Schicht ist, aus der Widerstandsmeßstreifen für eine Widerstandsmeßbrücke herausstrukturiert werden.

### ZEICHNUNGEN

Ausführungsbeispiele der Erfindung sind in den Zeichnungen dargestellt und in der nachfolgenden Beschreibung näher erläutert.

Es zeigen:
- Fig. 1a-d: einen Fließplan zur Illustration der speziellen Verfahrensschritte bei einem ersten Ausführungsbeispiel des erfindungsgemäßen Herstellungsverfahrens;
- Fig. 2a-d: einen Fließplan zur Illustration der speziellen Verfahrensschritte bei einem zweiten Ausführungsbeispiel des erfindungsgemäßen Herstellungsverfahrens;
- Fig. 3: den prinzipiellen Schaltungsaufbau des Dünnschichtsystems der heutzutage üblicherweise eingesetzten Hochdrucksensoren; und
- Fig. 4a-d: einen Fließplan zur Illustration der speziellen Verfahrensschritte bei heutzutage üblicherweise eingesetzten Hochdrucksensorelementen.

### BESCHREIBUNG DER AUSFÜHRUNGSBEISPIELE

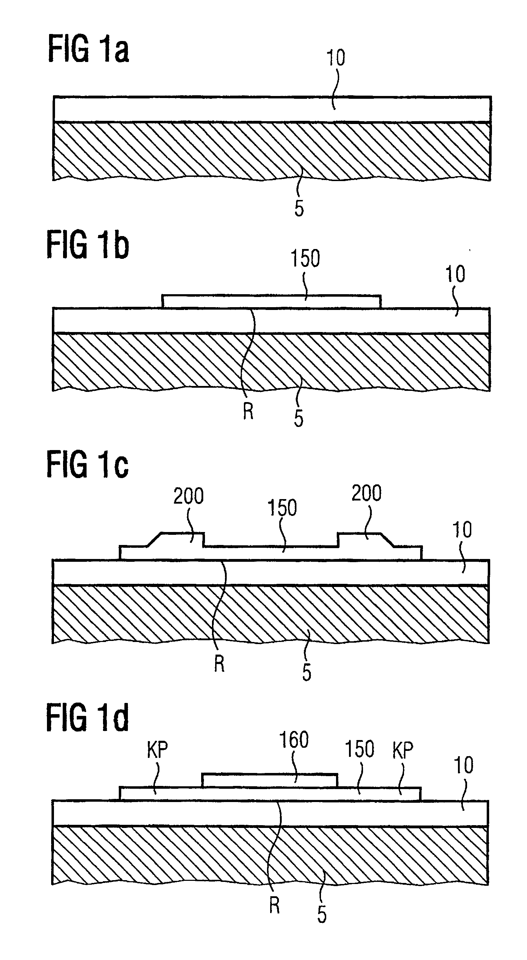

Fig. 1a-d zeigen einen Fließplan zur Illustration der speziellen Verfahrensschritte bei einem ersten Ausführungsbeispiel des erfindungsgemäßen Herstellungsverfahrens.

Im ersten Schritt (Fig. 1a) wird in bekannter Weise eine Substratisolationsschicht 10 bestehend aus 10 µm SiO₂ in einem PECVD-Prozeß auf die Oberseite des Edelstahlsubstrates 5 abgeschieden, welches in üblicher Weise vorbehandelt ist.

Im zweiten Schritt (Fig. 1b) wird eine Widerstandsschicht 150 aus Ta auf die SiO₂-Schicht aufgesputtert. Diese Ta-Schicht wird mit einem photoempfindlichen Lack beschichtet (z.B. durch Aufsprühen). Nach der Trocknung wird der Lack durch eine Photomaske hindurch belichtet. Die Photomaske enthält die Strukturen der 4 Widerstandselemente der Wheatstone-Meßbrücke sowie die Strukturen der 4 Kontaktpads KP. Nach dem Entwickeln dient die Lackmaske als Ätzmaske zur Strukturierung der Ta-Schicht. Das Ätzen des Ta kann wahlweise trockenchemisch in einer Plasmaätzanlage vorzugsweise mit einem CF₄/O₂ Gasgemisch oder naßchemisch in gepufferter Flußsäure (HF) erfolgen.

Nach dem Entfernen der Lackmaske mit Hilfe von Lösemitteln wird im dritten Schritt erneut eine Lackmaske 200 aufgebracht. Diese Lackmaske 200 muß nur die Bereiche der 4 Kontaktpads KP bedecken, wodurch keine hohen Anforderungen an die Präzision estellt werden müssen. Das Aufbringen kann vorzugsweise bereits strukturiert mit Hilfe eines Dispensessystemes oder eines Druckers (z.B. Tintenstrahldruck oder Siebdruck) erfolgen. Die Lackmaske 200 verhindert eine Oxidation der Kontaktpads KP.

Im vierten Schritt wird die Ta-Schicht in ein Elektrolysebad bestehend aus einer wäßrigen Zitronensäurelösung eingetaucht. Dabei ist darauf zu achten, daß nur die Ta-Schicht 150, nicht aber das Edelstahlsubstrat 5 mit dem Elektrolyten in Berührung kommt. Im Elektrolysebad befindet sich außer der Ta-Schicht 150 auch ein (nicht gezeigtes) Ta-Blech. Durch Anlegen einer Gleichspannung zwischen dem als Kathode agierenden Ta-Blech und der als Anode agierenden Ta-Schicht 150 des Sensorelements findet eine anodische Oxidation der freiliegenden Oberfläche der Widerstandsschicht zu Ta₂O₅ statt. Die Dicke der aufwachsenden Passivierungsschicht 160 kann sehr genau über die zwischen Anode und Kathode angelegten Gleichspannung gesteuert werden. Das dabei entstehende Ta₂O₅ ist ein Pinhole-freies, extrem langzeitstabiles und hochisolierendes Oxid und eignet sich deshalb bestens zur Passivierung der Oberfläche der Ta-Widerstände R.

Die Lackschicht 200 im Bereich der Kontaktpads KP verhindert an diesen Stellen die Oxidation. Nach dem Entfernen der Lackschicht 200 mit einem geeigneten Lösemittel gelangt man zum in Fig. 1d gezeigten Zustand.

Darauffolgend kann die metallische Oberfläche der Kontaktpads KP mittels Bonddrähten mit der Auswerteschaltung verbunden werden.

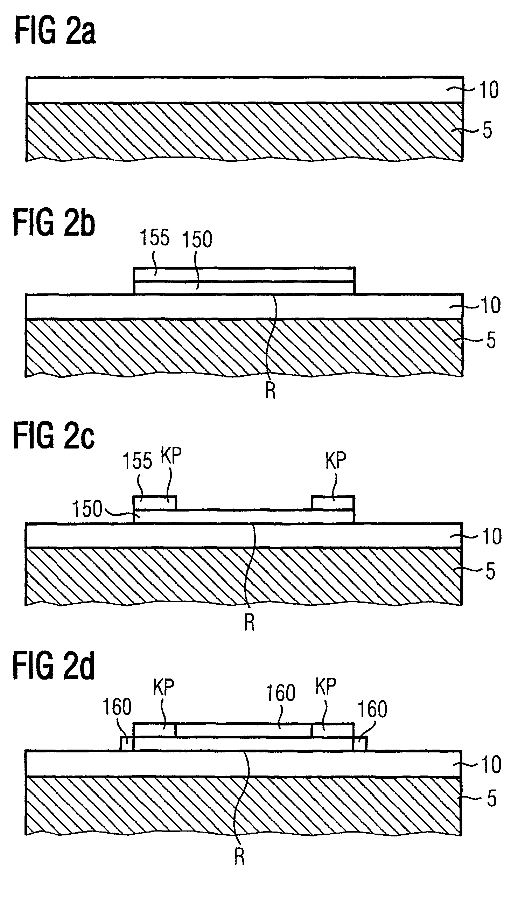

Fig. 2a-d einen Fließplan zur Illustration der speziellen Verfahrensschritte bei einem zweiten Ausführungsbeispiel des erfindungsgemäßen Herstellungsverfahrens.

Bei dieser zweiten Ausführungsform besteht im Unterschied zur obigen ersten Ausführungsform die zu kontaktierende Fläche der Kontaktpads KP aus Aluminium.

Zur Erzeugung dieser Schicht wird im 2. Schritt des Herstellungsprozesses (Fig. 2b) unmittelbar auf die Ta-Widerstandsschicht 150 eine Al-Schicht 155 aufgesputtert, was vorzugseise in einer Sputteranlage ohne Unterbrechen des Vakuums geschehen kann.

Anschließend wird die Doppelschicht 150, 155 aus Ta/Al mit der ersten Photolackmaske als Maskierung, die die Struktur der 4 Widerstandselemente R sowie der 4 Kontaktpads KP enthält, geätzt. Die Ätzung kann z.B. trockenchemisch in einem Plasmaätzer unter Verwendung von Cl₂/O₂ als Ätzgas für das Al und CF₄/O₂ als Ätzgas für das Ta durchgeführt werden. Im Anschluß an den Ätzprozeß wird die Photolackmaske mit Lösemitteln entfernt.

Im 3. Schritt wird das Bauelement zunächst erneut mit einer Photolackmaske versehen, welche ausschließlich die Strukturen für die Kontaktpads KP enthält. Beim folgenden naßchemischen Ätzschritt wird die Al-Schicht 155 im Bereich der Widerstände R entfernt. Im Anschluß an den Ätzprozeß wird die Photolackmaske mit Lösemitteln entfernt.

Im 4. Schritt wird erneut, wie in der ersten Ausführungsform beschrieben, eine anodische Oxidation der Oberfläche des Ta zu Ta₂O₅ als Passivierungsschicht 160 durchgeführt.

Da sich das Al ebenfalls im Elektrolyten befindet, wird auch dessen Oberfläche zu Al₂O₃ oxidiert. Das Al₂O₃ muß nach Durchführen des Anodisationsvorganges selektiv vom darunterliegenden Al abgeätzt werden, um eine metallische Oberfläche der Kontaktpads KP beim anschließenden Bondprozeß zur Verfügung zu haben.

Obwohl das erfindungsgemäße Herstellungsverfahren vorstehend anhand bevorzugter Ausführungsbeispiele beschrieben wurde, ist es darauf nicht beschränkt, sondern auf vielfältige Art und Weise modifizierbar.

Insbesondere sind die Auswahl der Schichtmaterialien und die Dicke der aufgebrachten Schichten anwendungsspezifisch auswählbar.

## Patentansprüche

1. Herstellungsverfahren für ein Dünnschicht-Bauelement, insbesondere ein Dünnschicht-Hochdrucksensorelement, welcher ein Substrat (5) aufweist, auf das mindestens eine zu strukturierende Funktionsschicht (150) aufzubringen ist, mit den Schritten:
Bereitstellen des Substrats (5);
Abscheiden der Funktionsschicht (150) auf dem Substrat (5);
Strukturieren der Funktionsschicht (150);
Maskieren eines bestimmten Bereichs (KP) der strukturierten Funktionsschicht (150); und
anodisches Oxidieren des nicht-maskierten Bereichs (R) der strukturierten Funktionsschicht (150) zum Bilden einer Passivierungsschicht (160).

2. Verfahren nach Anspruch 1, **dadurch gekennzeichnet** der bestimmte Bereichs (KP) der strukturierten Funktionsschicht (150) demaskiert wird und zum elektrischen Anschluß, insbesondere durch Bondierung, verwendet wird.

3. Verfahren nach Anspruch 1 oder 2, **dadurch gekennzeichnet, daß** das Strukturieren der Funktionsschicht (150) mittels eines Ätzprozesses unter Verwendung einer ersten Photomaske durchgeführt wird.

4. Verfahren nach Anspruch 3, **dadurch gekennzeichnet, daß** das Maskieren des bestimmten Bereichs (KP) der strukturierten Funktionsschicht (150) unter Verwendung einer zweiten Photomaske durchgeführt wird.

5. Verfahren nach Anspruch 1, **dadurch gekennzeichnet, daß** über der Funktionsschicht (150) eine weitere Funktionsschicht (155) abgeschieden wird; die weitere Funktionsschicht (155) zusammen mit der Funktionsschicht (150) strukturiert wird; und die weitere Funktionsschicht (155) zum Bilden des maskierten Bereichs (KP) und des nicht-maskierten Bereichs (R) teilweise entfernt wird.

6. Verfahren nach Anspruch 5, **dadurch gekennzeichnet, daß** die strukturierte weitere Funktionsschicht (155) zusammen mit dem nicht-maskierten Bereich (R) der Funktionsschicht (100) anodisch oxidiert wird und anschließend vom Oxid befreit wird, wobei das Oxid auf der Funktionsschicht (150) belassen wird.

7. Verfahren nach Anspruch 6, **dadurch gekennzeichnet, daß** . die vom Oxid befreite weitere Funktionsschicht (155) zum elektrischen Anschluß, insbesondere durch Bondierung, verwendet wird.

8. Verfahren nach einem der vorhergehenden Ansprüche, **dadurch gekennzeichnet, daß** das Dünnschicht-Bauelement ein Dünnschicht-Hochdrucksensorelement ist, bei dem das Substrat (5) eine Stahlmembran und eine darüberliegende Isolationsschicht (10) aufweist.

9. Verfahren nach einem der vorhergehenden Ansprüche, **dadurch gekennzeichnet, daß** die Funktionsschicht (150) eine Ta-Schicht ist, aus der Widerstandsmeßstreifen (R) für eine Widerstandsmeßbrücke herausstrukturiert werden.

## Claims

1. Process for producing a thin-film component, in particular a thin-film high-pressure sensor element, which has a substrate (5) to which at least one functional layer (150) which is to be structured can be applied, comprising the steps of:
Providing the substrate (5);
Depositing the functional layer (150) on the substrate (5);
Structuring the functional layer (150);
Masking a certain region (KP) of the structured functional layer (150); and
anodically oxidizing the unmasked region (R) of the structured functional layer (150) in order to form a passivation layer (160).

2. Process according to Claim 1, **characterized in that** the mask is removed from the certain region (KP) of the structured functional layer (150), and this region is used for electrical connection, in particular by bonding.

3. Process according to Claim 1 or 2, **characterized in that** the structuring of the functional layer (150) is carried out by means of an etching process using a first photomask.

4. Process according to Claim 3, **characterized in that** the masking of the certain region (KP) of the structured functional layer (150) is carried out using a second photomask.

5. Process according to Claim 1, **characterized in that** a further functional layer (155) is deposited above the functional layer (150); the further functional layer (155) is structured together with the functional layer (150); and the further functional layer (155) is partially removed in order to form the masked region (KP) and the unmasked region (R).

6. Process according to Claim 5, **characterized in that** the structured further functional layer (155) is anodically oxidized together with the unmasked region (R) of the functional layer (100), and then the oxide is removed from the structured further functional layer (155) while the oxide on the functional layer (150) is left in place.

7. Process according to Claim 6, **characterized in that** the further functional layer (155) from which the oxide has been removed is used for electrical connection, in particular by bonding.

8. Process according to one of the preceding claims, **characterized in that** the thin-film component is a thin-film high-pressure sensor element, in which the substrate (5) has a steel membrane and an insulation layer (10) above it.

9. Process according to one of the preceding claims, **characterized in that** the functional layer (150) is a Ta layer, out of which the resistance strain gauge (R) for a resistance measuring bridge is structured.

## Revendications

1. Procédé de fabrication d'un élément porteur de couche mince, notamment un capteur électrique fonctionnant à haute pression, comprenant un substrat (5) sur lequel doit être déposée au moins une couche fonctionnelle (150) à structurer,
**caractérisé par** les étapes suivantes :
- préparation du substrat (5),
- dépôt de la couche fonctionnelle (150) sur le substrat (5),
- masquage d'une zone définie (KP) de la couche fonctionnelle structurée (150),
- oxydation anodique de la zone non masquée (R) de la couche fonctionnelle structurée (150) pour former une couche de passivation (160).

2. Procédé selon la revendication 1,
**caractérisé en ce que**
la zone définie (KP) de la couche fonctionnelle structurée (150) est démasquée et est utilisée pour réaliser une liaison électrique, en particulier par fusion (bonding).

3. Procédé selon la revendication 1 ou 2,
**caractérisé en ce que**
la structuration de la couche fonctionnelle (150) est réalisée par un procédé de gravure utilisant un premier photomasque.

4. Procédé selon la revendication 3,
**caractérisé en ce que**
le masquage de la zone définie (KP) de la couche fonctionnelle structurée (150) s'effectue en utilisant un deuxième photomasque.

5. Procédé selon la revendication 4,
**caractérisé en ce que**
sur la couche fonctionnelle (150) est déposée une seconde couche fonctionnelle (155) ; celle-ci est structurée en même temps que la première couche (150) ; et la seconde couche (155) est retirée en partie pour former la zone masquée (KP) et la zone non masquée (R).

6. Procédé selon la revendication 5,
**caractérisé en ce que**
la seconde couche structurée (155) est oxydée anodiquement en même temps que la zone non masquée (R) de la couche fonctionnelle (100), puis elle est libérée de l'oxyde, celui-ci subsistant sur la première couche fonctionnelle (150).

7. Procédé selon la revendication 6,
**caractérisé en ce que**
la seconde couche fonctionnelle (155) est utilisée pour assurer le raccordement électrique, notamment par fusion.

8. Procédé selon une des revendications précédentes,
**caractérisé en ce que**
l'élément porteur de couche mince est un capteur à couche mince fonctionnant à haute pression, dans lequel le substrat (5) est une membrane d'acier recouverte d'une couche d'isolation (10).

9. Procédé selon une des revendications précédentes,
**caractérisé en ce que**
la couche fonctionnelle (150) est une couche de tantale dans laquelle sont structurées des bandes de résistance (R) pour créer un pont de Wheastone de mesure.
